# EUROPEAN PATENT APPLICATION

(11) **EP 4 382 760 A1**
(43) Date of publication of application: **12.06.2024**
(21) Application number: 23212742.3
(22) Date of filing: 28.11.2023
(51) Int. Cl.: F16C 27/06, F16H 1/16, F16H 57/021, F16C 35/07

(54) **A BEARING FIXING STRUCTURE FOR AN ACTUATOR**

(30) Priority: 06.12.2022 KR 20220168445
(71) Applicant: Keyang Electric Machinery Co., Ltd., Seoul 06178 (KR)
(72) Inventor: JANG, Soogil, 15611 Ansan-si, Gyeonggi-do (KR); LEE, Hogun, 15611 Ansan-si, Gyeonggi-do (KR); PARK, Kiseong, 15611 Ansan-si, Gyeonggi-do (KR)
(74) Representative: Stöckeler, Ferdinand

(57) **Abstract**

Bearing fixing structure for an actuator, wherein a pressure protrusion (60) is formed inside a bearing mounting groove (54) and an absorbent (70) is applied to the surface of the pressure protrusion, so that a laser energy is concentrated on the pressure protrusion during a laser fusion process, thereby improving a fusion precision and a fusion efficiency.

## Description

### CROSS REFERENCE TO RELATED APPLICATION

The present application claims priority to Korean Patent Application No. 10-2022-0168445, filed December 06, 2022, the entire contents of which is incorporated herein for all purposes by this reference.

### BACKGROUND OF THE DISCLOSURE

### Technical Field

The present disclosure relates to a bearing fixing structure for an actuator, in which a pressure protrusion is formed inside a bearing mounting groove and an absorbent is applied to the surface of the pressure protrusion, so that a laser energy is concentrated on the pressure protrusion during a laser fusion process, thereby improving a fusion precision and a fusion efficiency.

### Background Art

Generally, an electronic actuator of a vehicle is intended to operate a friction pad installed on a caliper of a disc brake device during parking. An electronic parking brake operates automatically by a user's switch operation, and for this purpose it consists of an electronic parking brake motor and a gear assembly (power transmission device) to transmit the power of the motor.

In this type of electronic parking brake, when the driver presses a parking brake switch, a rotational force of an actuator's motor is transmitted to the caliper's input shaft through the gear assembly (power transmission device) such as a decelerator. When the input shaft receiving power rotates, a pressurized connection sleeve moves forward, and a piston and a caliper housing accommodating the connection sleeve move toward each other as the connection sleeve advances. In addition, two friction pads mounted on the piston and caliper housing hold both sides of a disc against rotation to ensure parking.

A conventional electronic parking brake actuator assembly is disclosed in Korean Patent Publication No. 10-2020-0029587.

In a conventional actuator for a braking device, a worm gear is installed in a direction orthogonal to a motor shaft, and bearings and bushes (holders) are combined at both ends of the worm gear to be rotatable inside the housing.

The bearings and bushes (holders) of these brake actuators may be installed and fixed in mounting grooves formed on a cover and a housing.

However, as the bearing and bush (holder) are simply fixed in the mounting groove, the shaking of the bearing or bush (holder) may cause abnormal operation and failure of the actuator when vibration or shock occurs.

In addition, the bearing or bush may be fixed to the mounting groove by applying an ultrasonic fusion method to prevent shaking of these bearings and bushes. However, in the case of the ultrasonic fusion method of these bearings or bushes, there is a problem that vibration may cause subtle distortion of the shaft (warm gear) or surface damage due to stress generation in the cover part.

### Documents of Related Art

(Patent Document) Korean Patent Publication No. 10-2020-0029587

### Disclosure

### Technical Problem

The object of the present disclosure is to solve the problems of the prior art as described above. In a bearing fixing structure of an actuator according to the present disclosure, a pressure protrusion is formed inside a bearing mounting groove and an absorbent is applied to the surface of the pressure protrusion, so that a laser energy is concentrated on the pressure protrusion during a laser fusion process, thereby improving a fusion precision and a fusion efficiency.

### Technical Solution

According to the characteristics of the present disclosure for achieving the above-described object, a bearing fixing structure of an actuator according to the present disclosure comprises: a housing provided with a motor receiving part for accommodating a motor and a gear mounting part on which a reduction gear unit is mounted; a cover coupled to an open upper portion of the housing to close the upper portion of the housing; a worm gear installed inside the gear mounting part and installed in a direction orthogonal to a motor shaft to transmit rotational power of the motor shaft; a bearing installed on each side of the worm gear and rotatably supporting the worm gear; a bearing mounting groove recessed in an arc shape inside the cover, to which a portion of the bearing is fixedly coupled; and a pressure rib protruding from the inside of the bearing mounting groove by a predetermined height in one direction and pressing the bearing when the cover is assembled to the housing. The pressure rib is coated with an absorbent made of an infrared absorbing material to increase the transmittance of a laser, and the pressure rib is fused to the bearing by laser irradiation.

A laser irradiation surface having a flat surface is further provided on the upper surface of the cover to guide a laser irradiated onto the pressure rib through the cover so as to be uniformly irradiated onto the pressure rib.

A packing made of an elastic material and in close contact with the outer circumferential surface of the bearing is further provided between the pressure rib and the bearing.

The pressure rib is fused and fixed to the packing by laser irradiation.

The packing is made of rubber or silicone material and is tightly fixed to the outer circumferential surface of the bearing to absorb vibration.

### Advantageous Effects

A bearing fixing structure of an actuator according to the present disclosure has the following effects.

In the present disclosure, the bearing fixing structure of the actuator has a pressure rib formed inside a bearing mounting groove and an absorbent is applied to the surface of the pressure rib, so that a laser energy is concentrated on the pressure rib during a laser fusion process, thereby improving fusion precision and a fusion efficiency

In addition, a laser irradiation surface is formed as a flat surface on a bearing mounting part, so that a laser irradiated onto the pressure rib is irradiated uniformly, thereby preventing product damage and fusion defects due to laser deflection.

In addition, as a packing is additionally installed between the pressure rib and the bearing to absorb vibration and shock applied to the bearing, thereby preventing damage to the bearing due to vibration and shock and malfunction of a worm gear.

### Description of Drawings

FIG. 1 is a perspective view showing the configuration of a preferred embodiment of an actuator according to the present disclosure.
FIG. 2 is a perspective view showing an open state of a cover of the actuator according to the present disclosure.
FIG. 3 is an enlarged perspective view showing the configuration of a bearing mounting groove and a pressure rib constituting the embodiment of the present disclosure.
FIG. 4 is a cross-sectional view showing a state before the pressure rib is fused to a bearing constituting the embodiment of the present disclosure.
FIG. 5 is a cross-sectional view showing a state in which the pressure rib is fused to the bearing constituting the embodiment of the present disclosure.
FIG. 6 is a cross-sectional view showing a state in which a packing is installed between the pressure rib and the bearing constituting the embodiment of the present disclosure.
FIG. 7 is a cross-sectional view showing a state in which the packing is installed between the pressure rib and the bearing constituting the embodiment of the present disclosure.

### DETAILED DESCRIPTION OF THE DISCLOSURE

Hereinafter, a preferred embodiment of a bearing fixing structure of an actuator according to the present disclosure will be described in detail with reference to the attached drawings.

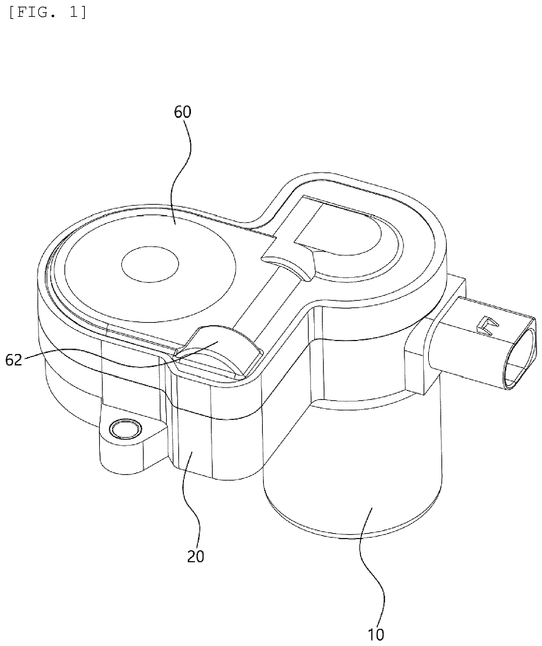

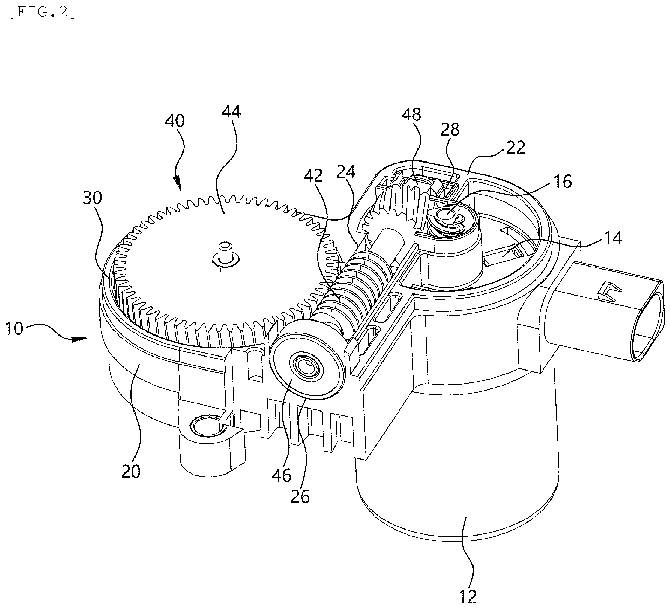

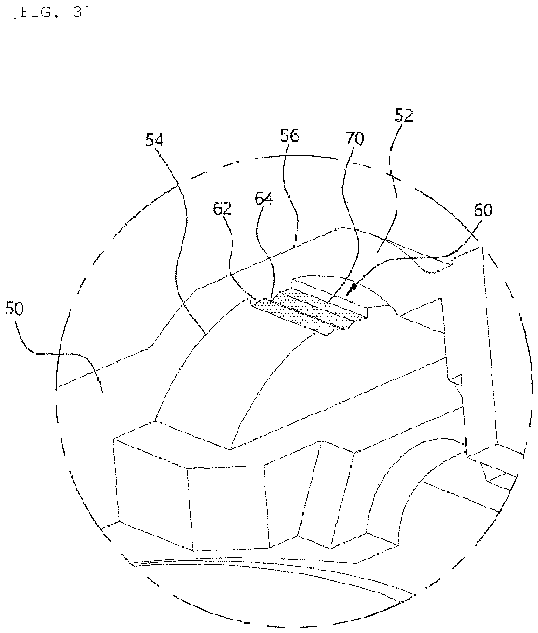

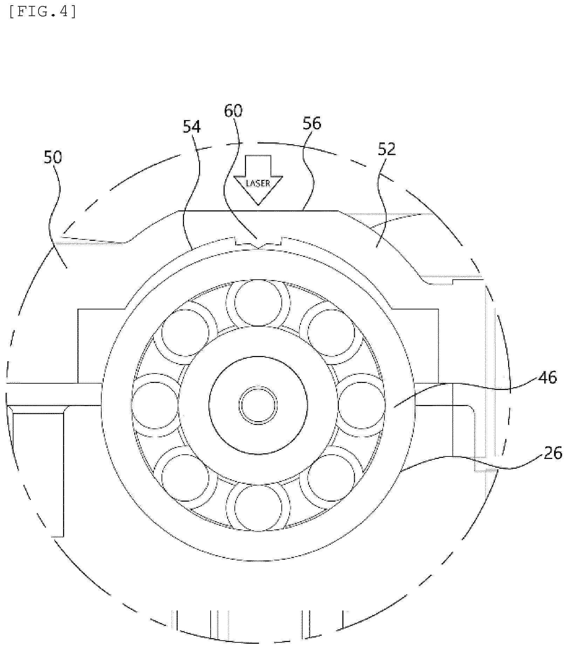

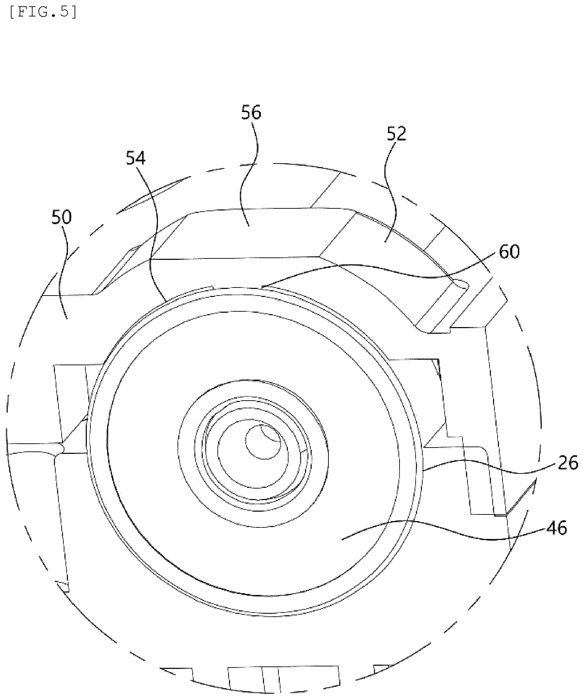

FIG. 1 shows a perspective view showing the configuration of a preferred embodiment of an actuator according to the present disclosure, FIG. 2 shows a perspective view showing an open state of a cover of the actuator according to the present disclosure, FIG. 3 shows an enlarged perspective view showing the configuration of a bearing mounting groove and a pressure rib constituting the embodiment of the present disclosure, FIG. 4 shows a cross-sectional view showing a state before the pressure rib is fused to a bearing constituting an embodiment of the present disclosure, and FIG. 5 shows a cross-sectional view showing a state in which the pressure rib is fused to the bearing constituting an embodiment of the present disclosure.

As shown in FIGS. 1 to 5, a bearing fixing structure of an actuator according to the present disclosure is characterized by including: a housing 10 provided with a motor receiving part 12 accommodating a motor 14 and a gear mounting part 20 on which a reduction gear unit 40 is mounted; a cover 50 coupled to an open upper portion of the housing 10 to close the upper portion of the housing 10; a worm gear 42 installed inside the gear mounting part 20 and installed in a direction orthogonal to a motor shaft 16 to transmit rotational power of the motor shaft 16; a bearing 46 installed on each side of the worm gear 42 and rotatably supporting the worm gear 42; a bearing mounting groove 54 recessed in an arc shape inside the cover 50, to which a portion of the bearing 46 is fixedly coupled; and a pressure rib 60 protruding from the inside of the bearing mounting groove 54 by a predetermined height in one direction and pressing the bearing 46 when the cover 50 is assembled to the housing 10.

The actuator according to the present disclosure generates a large rotational force by decelerating the driving of a motor and transmits it to the outside to function as an electronic brake. For this purpose, a reduction gear unit 40 along with a motor 14 is installed inside the actuator of the present disclosure. The reduction gear unit 40 described below refers to an overall structure composed of a plurality of gears.

First, looking at FIGS. 1 and 2, the actuator forms an entire external structure by combining a housing 10 and a cover 50. Here, the housing 10 may be divided into a motor receiving part 12 and a gear mounting part 20. When the housing 10 and the cover 50 are combined, a motor 14 and a reduction gear unit 40 are all shielded, and only a connector (not shown) for power supply and a final output shaft (not shown) are exposed to the outside.

A motor 14 is installed inside the motor receiving part 12, and a motor shaft 16 is connected to the motor 14. The motor shaft 16 is rotated through the driving force of the motor 14, and extends in the longitudinal direction of the motor receiving part 12 with respect to FIG. 2. A first worm 18, which will be described later, is installed at the end of the motor shaft 16. The first worm 18 rotates together with the motor shaft 16 and transmits the driving force of the motor 14 to a worm gear 42, which will be described later. As shown in FIG. 2, the first worm 18 is exposed to the outside only when a cover 50, which will be described later, is removed.

A gear mounting part 20 is formed on the upper part of the motor receiving part 12. The gear mounting part 20 is coupled to the upper part of the motor receiving part 12 and extends in the lateral direction of the motor receiving part 12. A reduction gear unit 40, which will be described later, is accommodated in a portion extending in the lateral direction of the motor receiving part 12. The gear mounting part 20 may be assembled separately from the motor receiving part 12, or may be made integral with both.

A receiving part 22 is formed on the upper surface of the gear mounting part 20. The receiving part 22 is an open portion on the upper surface of the gear mounting part 20 and is also a portion shielded by the cover 50. A reduction gear unit 40, which will be described later, is installed in the receiving part 22. For this purpose, the receiving part 22 has a first installation part 24 into which a worm gear 42, which will be described later, is installed, and a second installation part 30, into which a drive gear 44, which will be described later, is inserted. This will be explained again below.

The first installation part 24 is formed in the receiving part 22. The first installation part 24 is a portion in which a worm gear 42 is seated among the reduction gear units 40, which will be described later. The first installation part 24 extends longitudinally in one direction and is recessed by a predetermined depth in an arc shape. Inside the first installation part 24, the worm gear 42, which will be described later, is inserted and rotatably mounted as shown in FIG. 2.

Bearing insertion grooves 26 and bush insertion grooves 28 are formed at both ends of the first installation part 24.

As shown in FIG. 2, the bearing insertion groove 26 and the bush insertion groove 28 are recessed by a predetermined depth in a semicircular shape. Inside the bearing insertion groove 26 and the bush insertion groove 28, a portion of the bearing 46 and the bush 48, which will be described later, are vertically inserted and fixed.

A second installation part 30 is formed on the left side of the receiving part 22. The second installation part 30 is formed to be recessed in a circular shape surrounding a drive gear 44, which will be described later. The drive gear 44 is inserted into the second installation part 30. Inside the second installation part 30, the drive gear 44, which will be described later, is rotatably installed.

A reduction gear unit 40 is installed inside the first installation part 24 and the second installation part 30. The reduction gear unit 40 largely consists of the worm gear 42 and the drive gear 44.

The worm gear 42 is a general worm gear, and detailed description will be omitted. The worm gear 42 is installed long forward and backward direction inside the first receiving part 22. One side of the worm gear 42 is gear-coupled to a first worm 18 of the motor shaft 16, and the other side of the worm gear 42 is gear-coupled to a drive gear 44, which will be described later. The worm gear 42 is rotatably installed inside the first receiving part 22 and serves to transmit the rotational power of the motor shaft 16 to the drive gear 44, which will be described later.

In addition, the worm gear 42 is installed in a direction orthogonal to the motor shaft 16 to reduce and transmit the drive of the motor 14, but also serves to transmit the drive by changing the direction.

A drive gear 44 is installed inside the second receiving part 22. The drive gear 44 is a general spur gear, and detailed description will be omitted. The drive gear 44 is gear-coupled to the worm gear 42 and is rotatably installed in the second receiving part 22 to transmit the reduced rotational power to the outside.

Bearings 46 and bushes 48 are installed on each side of the worm gear 42. The bearing 46 is a general bearing and detailed description will be omitted. The bearing 46 is installed inside the bearing insertion groove 26 as shown in FIG. 2 and serves to rotatably support the worm gear 42.

The bush 48 is installed on the opposite side of the bearing 46. The bush 48 is a general bush and detailed description will be omitted. The bush 48 is fixedly coupled to the end of the worm gear 42 and is inserted into the bush insertion groove 28 to rotatably support the worm gear 42.

A cover 50 is installed on the upper side of the housing 10. The cover 50 is installed to cover the upper opening of the housing 10. The cover 50 is coupled and fixed to the upper end of the motor receiving part 12 and the gear mounting part 20. The cover 50 serves to close the upper end of the housing so that the motor shaft 16 and the reduction gear unit 40 are not exposed to the outside.

A bearing mounting part 52 is protruding from one side of the upper surface of the cover 50. The bearing mounting part 52 has an arc shape and protrudes upward at a position corresponding to the bearing insertion groove 26. Inside the bearing mounting part 52, the upper part of the bearing 46 is inserted and fixed.

A bearing mounting groove 54 is formed inside the bearing mounting part 52. The bearing mounting groove 54 is recessed in a semicircular shape inside the bearing mounting part 52. Inside the bearing mounting groove 54, the upper end of the bearing 46 is inserted and fixed.

A laser irradiation surface 56 is formed on the upper surface of the bearing mounting part 52. The laser irradiation surface 56 is formed as a flat surface on the ceramic bearing mounting part 52, as shown in FIGS. 3 and 4. The laser irradiation surface 56 is preferably formed as a flat surface so that a laser beam may be irradiated uniformly onto the pressure rib 60, which will be described later, when the laser is irradiated onto the cover.

In addition, since the laser irradiation surface 56 is made of a flat surface, it is possible to prevent refraction of the laser irradiated onto the cover 50.

A pressure rib 60 is formed inside the bearing mounting groove 54. As shown in FIG. 3, the pressure rib 60 is formed to protrude in a downward direction forward and backward longitudinally along the center of the inner surface of the bearing mounting groove 54. The pressure rib 60 consists of a contact rib 62 and a fixing rib 64. The contact rib 62 has a rectangular parallelepiped shape and protrudes in a downward direction forward and backward longitudinally along the center of the inner surface of the bearing mounting groove 54. The contact rib 62 is a part that is in close contact along the outer circumferential surface of the upper center of the bearing 46.

A fixing rib 64 is formed in the center of the contact rib 62. The fixing rib 64 has a tip shape and protrudes in a downward direction forward and backward longitudinally along the center of the fixing rib 62. The fixing rib 64 is in close contact with the center of the upper outer circumferential surface of the bearing 46 and serves to fix the bearing 46.

That is, when the cover 50 is coupled to the housing 10, the pressure rib 60 is pressed to the upper outer circumferential surface of the bearing 46 to fix the bearing 46.

An absorbent 70 is applied to the lower surface of the pressure rib 60. The absorbent 70 is made of an infrared absorbing material and serves to absorb laser energy when a laser is irradiated perpendicularly to the laser irradiation surface 56.

That is, when the absorbent 70 is applied to the pressure rib 60 and the laser is irradiated perpendicularly to the laser irradiation surface 56 during a laser fusion process of the cover 50 and the housing, the laser energy is absorbed intensively on the pressure rib 60 side by the absorbent 70, and accordingly, the pressure rib 60 may be thermally fused to the upper outer surface of the bearing 46, as shown in FIG. 5.

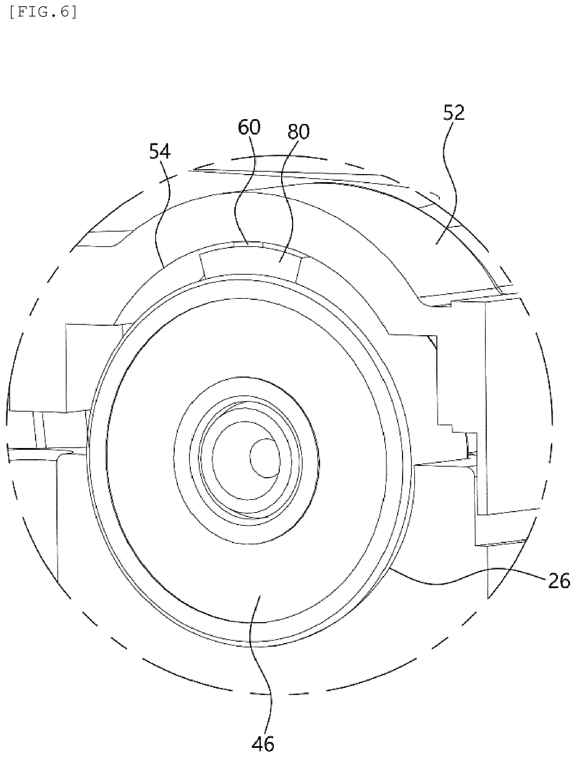

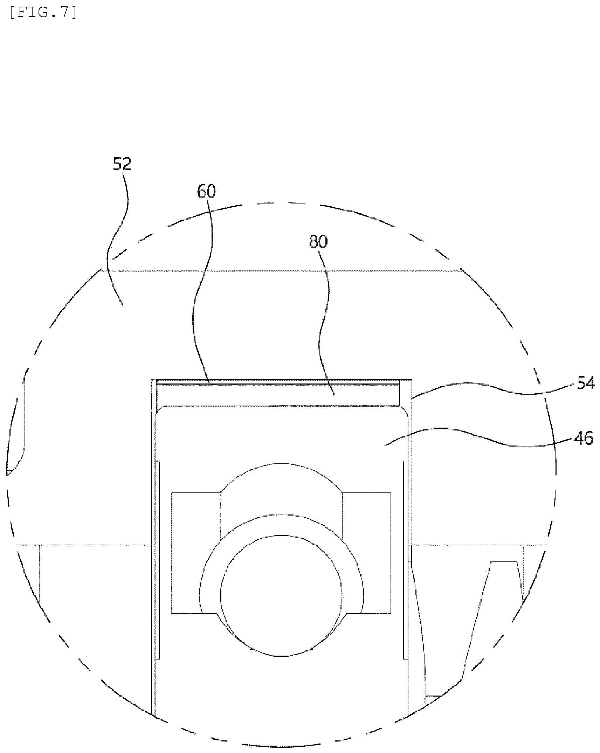

Figure 6 shows a cross-sectional view showing a state in which a packing is installed between the pressure rib and the bearing constituting the embodiment of the present disclosure, and Figure 7 shows a cross-sectional view showing a state in which the packing is installed between the pressure rib and the bearing constituting the embodiment of the present invention.

As shown in FIGS. 6 and 7, a packing 80 may be additionally installed between the pressure rib 60 and the bearing 46. The packing 80 is made of elastic rubber and silicone materials and is formed in an arc shape with a predetermined thickness.

In addition, the packing 80 may also be manufactured with a leaf spring, but only the packing 80 made of rubber and silicon will be described here. The pressure rib 60 is in close contact with the upper surface of the packing 80, and the outer surface of the bearing 46 is in close contact with the lower surface of the packing 80. The packing 80 may be firmly fixed to the inside of the bearing mounting groove 54 because the pressure rib 60 is fused to the upper surface of the packing 80 by a laser fusion method.

That is, the packing 80 is made of an elastic material and is installed between the pressure rib 60 and the bearing 46 to absorb vibration generated in the bearing 46.

In this way, according to the present disclosure, the bearing fixing structure of the actuator has the pressure rib 60 formed inside the bearing mounting groove 54 and the absorbent is applied to the surface of the pressure rib 60, so that a laser energy is concentrated on the pressure rib 60 during a laser fusion process, thereby improving fusion precision and a fusion efficiency.

In addition, the laser irradiation surface 56 is formed as a flat surface on the bearing mounting part 52, so that the laser irradiated onto the pressure rib 60 is irradiated uniformly, thereby preventing product damage and fusion defects due to laser deflection.

In addition, as the packing 80 is additionally installed between the pressure rib 60 and the bearing 46 to absorb vibration and shock applied to the bearing 46, thereby preventing damage to the bearing due to vibration and shock and malfunction of the worm gear.

The scope of the present disclosure is not limited to the embodiments illustrated above, and many other modifications based on the present disclosure will be possible to those skilled in the art within the above technical scope.

**Reference Numerals in the Drawings**

| | | | |
|---|---|---|---|
| 10. | housing | 12. | motor receiving part |
| 14. | motor | 16. | motor shaft |
| 20. | gear mounting part | 22. | receiving part |
| 24. | first installation part | 26. | bearing insertion groove |
| 28. | bush insertion groove | 30. | second installation part |
| 40. | reduction gear unit | 42. | worm gear |
| 44. | drive gear | 46. | bearing |
| 48. | bush | 50. | cover |
| 52. | bearing mounting part | 54. | bearing mounting groove |
| 56. | laser irradiation surface | 60. | pressure rib |
| 62. | contact rib | 64. | fixing rib |
| 70. | absorbent | 80. | packing |

## Claims

1. A bearing fixing structure of an actuator comprising:
a housing (10) provided with a motor receiving part (12) accommodating a motor (14) and a gear mounting part (20) on which a reduction gear unit (40) is mounted;
a cover (50) coupled to an open upper portion of the housing (10) to close the upper portion of the housing (10);
a worm gear (42) installed inside the gear mounting part (20) and installed in a direction orthogonal to a motor shaft (16) to transmit rotational power of the motor shaft (16);
a bearing (46) installed on each side of the worm gear (42) and rotatably supporting the worm gear (42);
a bearing mounting groove (54) recessed in an arc shape inside the cover (50), to which a portion of the bearing (46) is fixedly coupled; and
a pressure rib (60) protruding from the inside of the bearing mounting groove (54) by a predetermined height in one direction and pressing the bearing (46) when the cover (50) is assembled to the housing (10);
**characterized in that** the pressure rib (60) is coated with an absorbent (70) made of an infrared absorbing material to increase the transmittance of a laser, and the pressure rib (60) is fused to the bearing (46) by laser irradiation.

2. The bearing fixing structure of the actuator of claim 1, further comprising a laser irradiation surface (56) provided on the upper surface of the cover (50),
**characterized in that** the laser irradiation surface (56) has a flat surface for guiding a laser irradiated onto the pressure rib (60) through the cover (50) so as to be uniformly irradiated onto the pressure rib (60).

3. The bearing fixing structure of the actuator of claim 2, further comprising a packing (80) provided between the pressure rib (60) and the bearing (46),
**characterized in that** the packing (80) is made of an elastic material and in close contact with the outer circumferential surface of the bearing (46).

4. The bearing fixing structure of the actuator of claim 3, **characterized in that** the pressure rib (60) is fused and fixed to the packing (80) by laser irradiation.

5. The bearing fixing structure of the actuator of claim 3, **characterized in that** the packing (80) is made of rubber or silicone material and is tightly fixed to the outer circumferential surface of the bearing (46) to absorb vibration.
